Europäisches Patentamt

European Patent Office

Office européen des brevets

(19)

(11) Numéro de publication: **0 457 695 B1**

(12) **FASCICULE DE BREVET EUROPEEN**

(45) Date de publication de fascicule du brevet: **11.01.95**

(21) Numéro de dépôt: **91420151.2**

(22) Date de dépôt: **13.05.91**

(51) Int. Cl.6: **A01N 37/40**, A01N 33/22,
//(A01N37/40,33:22),
(A01N33/22,37:40)

(54) **Association herbicide comprenant le 2-chloro 6-nitro 3-phénoxy aniline et au moins un herbicide choisi parmi le bromoxynil ou l'ioxynil ou l'un de leurs dérivés.**

(30) Priorité: **14.05.90 FR 9006209**

(43) Date de publication de la demande:
**21.11.91 Bulletin 91/47**

(45) Mention de la délivrance du brevet:
**11.01.95 Bulletin 95/02**

(84) Etats contractants désignés:
**AT BE CH DE DK ES FR GB GR IT LI LU NL SE**

(56) Documents cités:
**EP-A- 0 007 482**

**C.R. WORTHING et al.: "The Pesticide Manual", 8th edition, 1987, pages 100-102,479-482, British Crop Protection Council, Thornton Heath,**

(73) Titulaire: **RHONE-POULENC AGROCHIMIE
14-20, rue Pierre Baizet
F-69009 Lyon (FR)**

(72) Inventeur: **Bernard, Thierry
5 Chemin du Calvaire
F-69570 Dardilly (FR)**

(74) Mandataire: **Chrétien, François et al
RHONE-POULENC AGROCHIMIE- DPI
B.P. 9163
F-69263 Lyon Cédex 09 (FR)**

EP 0 457 695 B1

Rank Xerox (UK) Business Services
(3.10/3.09/3.3.3)

**Description**

La présente invention concerne un produit herbicide résultant de l'association d'un herbicide de type benzonitrile choisi parmi le bromoxynil ou l'ioxynil ou l'un de leurs dérivés et de 2-chloro 6-nitro 3-phénoxy aniline convenant de façon remarquable au contrôle sélectif des mauvaises herbes dans les cultures.

L'invention concerne également l'utilisation du nouveau produit à titre d'herbicide, notamment sous la forme de composition et un procédé pour contrôler les mauvaises herbes dans les cultures à l'aide du produit ou de la composition.

Art antérieur :

Les herbicides de type benzonitrile choisis parmi le bromoxynil ou l'ioxynil ou leurs dérivés, seuls ou en mélange, sont utilisés très largement pour contrôler en post émergence dans les champs de céréales les mauvaises herbes de type dicotylédones. On appelle en général ces herbicides par la dénomination abrégée "HBN" ou hydroxybenzonitrile. On peut citer, parmi les HBN, notamment :
le bromoxynil ou 3,5-dibromo-4 hydroxybenzonitrile,
le bromoxynil octanoate ou heptanoate qui est l'ester correspondant,
l'ioxynil ou 4-hydroxy-3,5 diiodo benzonitrile,
l'ioxynil octanoate qui est l'ester correspondant ou le sel de potassium ou de sodium d'ioxynil.

Lorsque les HBN sont utilisés en post levée précoce, ils sont très efficaces sur de nombreuses mauvaises herbes, encore que leur activité pourrait être largement améliorée sur certaines adventices particulièrement nuisibles comme Galium aparine, Lamium purpurea, Veronica persica.

On connait par ailleurs l'aclonifen ou 2-chloro 6-nitro 3-phénoxy aniline qui est un herbicide sélectif des cultures de tournesol, de pois, et qui est normalement utilisé à des doses supérieures à 2 kg/ha.

Objet de l'invention ou problème à résoudre :

Il est toujours souhaitable d'améliorer l'action des matières herbicides ainsi que leur vitesse d'action.

L'invention propose ainsi quant à elle une nouvelle association qui résulte d'un choix limité effectué parmi un nombre pratiquement infini de possibilités et qui procure des avantages importants qui seront mieux compris à la lumière de ce qui va être décrit ci-après.

Il a été trouvé ainsi de manière parfaitement inattendue que l'association améliorait de façon notable et surprenante l'action respective et isolée des deux matières pour un certain nombre d'adventices particulièrement nuisibles dans les cultures. Cela, tout en conservant la sélectivité vis vis des cultures. Il en découle donc une amélioration du spectre d'activité et une possibilité de diminuer la dose respective de chaque matière active utilisée, cette dernière qualité étant particulièrement importante pour des raisons écologiques aisément compréhensibles.

Ainsi, l'association présente un remarquable degré de synergisme comme c'est défini par PML Tammes, Netherlands Journal of Plant Pathology, <u>70</u> (1964), p. 7380 dans un article intitulé "Isoboles, une représentation graphique de synergie dans les pesticides" ou comme défini par Limpel, L.E., P.H. Schuldt and D. Lamont, 1962, Proc. NEWCC 16:48-53, en selon la formule (utilisée par COLBY) :

$$E = X + Y - \frac{XY}{100}$$

où E est le pourcentage attendu d'inhibition de la croissance par un mélange des deux herbicides à des doses définies, X est le pourcentage d'inhibition observé de la croissance par l'herbicide A à une dose définie, Y est le pourcentage d'inhibition observé de la croissance par l'herbicide a à une dose définie. Quand le pourcentage d'inhibition observé de l'association est plus grand que E il y a synergie.

En outre, il a été trouvé de manière totalement inattendue que l'aclonifen, à une dose qui en soi n'est pas herbicide d'un point de vue industriel (c'est-à-dire avec une efficacité nulle ou insuffisante), potentialisait ou amplifiait considérablement l'effet herbicide des HBN. Il s'agit donc dans ce cas d'une innovation notable quant à ses conséquences sur les méthodes d'emploi desdits HBN.

L'invention :

Produit herbicide résultant de l'association de :
a) 2-chloro 6-nitro 3-phenoxy aniline et,
b) un ou plusieurs herbicides de type 3,5-dihalogéno 4-hydroxy benzonitrile ou un ester ou sel acceptables en agriculture de ces composés, en une quantité produisant une activité herbicide synergique.

Les herbicides de type dihalogéno-3,5 hydroxy-4-benzonitriles, selon l'invention, peuvent exister sous forme phénolique de sels d'amines, de potassium ou de sodium, ou sous la forme d'ester notamment avec un acide alcanoïque (de préférence un acide alcanoïque comprenant 4 à 8 atomes de carbone).

Parmi ces herbicides, on mentionne notamment le bromoxynil qui est le 3,5-dibromo 4-hydroxy benzonitrile ou l'ioxynil qui est le 4-hydroxy 3,5-diiodo benzonitrile.

En ce qui concerne le bromoxynil, les formes les plus utilisées sont les formes ester pour les céréales et le maïs et la forme phénolique pour le maïs. En général, la forme phénolique est utilisée à des doses sensiblement plus élevées que la forme ester (1,8 à deux fois en général) mais révèle une phytotoxicité moindre, ce qui justifie son emploi dans certaines conditions.

En ce qui concerne l'ioxynil, il est couramment utilisé sous forme ester ou de sels de potassium ou de sodium notamment dans les cultures de céréales, quelquefois de canne à sucre, de riz ou d'oignons. La différence d'action est moins importante entre l'ioxynil ester et l'ioxynil sel qu'entre le bromoxynil ester et le bromoxynil forme phénolique ( facteur 1 et deux tiers environ).

De préférence, la forme utilisée est l'ester du bromoxynil ou de l'ioxynil avec un acide alcanoïque comprenant de 4 à 8 atomes de carbone.

Avantageusement, on utilisera le bromoxynil butyrate, heptanoate ou octanoate ou un mélange de deux ou trois de ces composés.

La forme la plus préférée est le bromoxynil heptanoate ou octanoate et encore plus avantageusement : le bromoxynil octanoate.

Ces produits peuvent être utilisés à titre d'herbicide dans une gamme de rapport en poids 2-chloro 6-nitro 3-phénoxy aniline-HBN très large et qui dépendra en partie des cultures traitées, des conditions climatiques, de la nature du sol, du stade de traitement des adventices majoritaires à l'endroit concerné, et même éventuellement du souhait de l'utilisateur selon qu'il veuille un terrain parfaitement propre ou qu'il se contente d'un désherbage satisfaisant mais non total.

Ces produits selon l'invention sont destinés à une utilisation simultanée, séparée ou étalée dans le temps pour le traitement herbicide des végétaux indésirables, notamment contre les adventices présentes dans les cultures. La nature des cultures concernées peut varier selon l'HBN considéré. On reviendra sur ce point dans la partie réservée au procédé de traitement ci-après.

Dans le cas d'une utilisation simultanée (qui est préférée), on petit utiliser des produits prêts à l'emploi contenant l'association des matières actives décrites plus haut. On peut également utiliser des produits préparés juste avant l'emploi, par mélange extemporanné des matières activess comme elles sont décrites ci-après.

L'utilisation peut également utiliser le produit en traitant les cultures à protéger successivement par l'une puis l'autre des matières actives le 2-chloro 6-nitro 3-phénoxy et HBN, de manière à former in situ sur la plante le produit selon l'invention.

Selon une variante préférée, le rapport en poids 2-chloro 6-nitro 3-phénoxy aniline/dihalogéno-3,5 hydroxy-4-benzonitriles est compris entre 0, 1 et 20, compte tenu évidemment des variations qui peuvent exister dans cette fourchette du fait de l'utilisation de l'ester plutôt que du phénol dans le cas du bromoxynil ou de l'ester plutôt que du sel dans le cas de l'ioxynil.

Ainsi dans le cas du bromoxynil phénol, les rapports seront déplacés vers la zone inférieure de la fourchette du fait qu'il en faut plus.

De préférence, le rapport en poids est compris entre 0,2 et 5 dans le cas des bromoxynil ou ioxynil esters.

Les associations sont le plus souvent de type binaire, mais on peut envisager quelquefois des associations ternaires ou quaternaires avec un ou plusieurs autres pesticides compatibles (y compris fongicide ou insecticide).

Comme cela a été indiqué auparavant, l'un des problèmes, que la déposante se propose de résoudre, est d'amplifier l'action des HBN. Dans ce cas, le 2-chloro 6-nitro 3-phénoxy aniline joue le rôle de potentialiseur, ou dans le jargon propre au métier de la protection des cultures, de "synergiste".

Dans ce cas, les rapports préférés indiqués plus haut conviennent également mais en tenant compte du fait que le 2-chloro 6-nitro 3-phénoxy aniline est à une dose peu ou pas herbicide (voir partie méthode d'utilisation ci-après).

Ainsi le produit se définit comine un produit herbicide à base d'HBN comprenant comme amplificateur, en soi non ou peu herbicide à la dose (g/ha) considérée, le 2-chloro 6-nitro 3-phénoxy aniline.

Bien évidemment, les variantes préférées en ce qui concerne les HBN selon l'invention, sont également valables dans la présente utilisation. Aussi l'on comprendra que également dans le cas du 2-chloro 6-nitro 3-phénoxy aniline comme amplificateur, les HBN sous forme ester seront avantageusement utilisés.

L'utilisation des produits selon l'invention s'effectue la plupart du temps sous forme de composition herbicide comportant un ou plusieurs supports acceptables en agriculture et un ou plusieurs agents tensio actifs, en plus du produit herbicide.

Dans le cas de préparations extemporannées, chaque matière active petit être sous la forme d'une composition. Par contre, dans le cas d'un mélange prêt à l'emploi c'est l'association elle-même qui se trouve sous la forme d'une composition.

Parfois, compte tenu des formulations disponibles sur le marché, il est possible de disposer aisément d'une composition prête à l'emploi contenant l'association. Parfois, une formulation adéquate, à la portée de l'homme de metier, sera nécessaire.

Ces compositions contiennent en plus de la matière active ou de l'association selon l'invention telle que décrite précédemment, les supports solides ou liquides, acceptables en agriculture et les agents tensio-actifs également acceptables en agriculture. En particulier, sont utilisables les supports inertes et usuels et les agents tensio-actifs usuels.

Ces compositions contiennent habituellement entre 0,5 et 95 % de matière active ou d'association selon l'invention. Les pourcentages étant sauf mention contraire en poids.

Par le terme "support", dans le présent expose, on désigne une matière organique ou minérale, naturelle ou synthétique, avec laquelle la matière active ou l'association est combinée pour faciliter son application sur la plante, sur des graines ou sur le sol. Ce support est donc généralement inerte et il doit être acceptable en agriculture notamment sur la plante traitée. Le support peut être solide (argiles, silicates naturels ou synthétiques, silice, résines, cires, engrais solides, etc...) ou liquide (eau, alcools, cétones, fractions de pétrole, hydrocarbures aromatiques ou paraffiniques, hydrocarbures chlorés, gaz liquéfiés, etc...).

L'agent tensio actif petit être un agent émulsionnant, dispersant ou mouillant de type ionique. On peut citer par exemple des sels d'acides polyacryliques, des sels d'acides lignosulfoniques, des sels d'acides phénolsulfoniques ou naphtalènesulfoniques, des polycondensats d'oxyde d éthylène sur des alcools gras ou sur des acides gras ou sur des amines grasses, des phénols substitués (notamment des alkylphénols ou des arylphénols), des sels d'esters d'acides sulfosucciniques, des dérivés de la taurine (notamment des alkyltaurates), des esters phosphoriques d'alcools ou de phénols polyoxyéthylés. La présence d'au moins un agent tensio actif est indispensahle car les matières actives associées (le 2-chloro 6-nitro 3-phénoxy + HBN) ne sont pas solubles dans l'eau et que l'agent vecteur de l'application est l'eau.

Comme formes de compositions agricoles, on peut citer les poudres pour poudrage ou dispersion (à teneur en matières actives pouvant aller jusqu'à 100 %) et les granulés, notamment ceux obtenus par extrusion, par compactage, par imprégnation d'un support granulé par granulation à partir d'une poudre (la teneur en matières actives dans ces granulés étant entre 1 et 80 % pour ces derniers cas).

Comme formes de compositions liquides ou destinées à constituer des compositions liquides lors de l'application, on peut citer les concentrés émulsionnables, les émulsions, les suspensions concentrées, les poudres mouillables (ou poudre à pulvériser), les pâtes.

Pour illustrer ces propos, sont données ci-après quelques informations plus précises sur ce type de formulation :

- les concentrés émulsionnables comprennent le plus souvent 10 à 80 % de matière active ou d'association, de 0,5 à 15 % d'agents tensio actifs, de 0,1 à 10 % d'agents épaississants et de 0 à 10 % d'additifs appropriés ;
- les poudres mouillables (ou poudre à pulvériser) sont habituellement préparées de manière qu'elles contiennent 20 à 95 % de matière active, et elles contiennent habituellement, en plus du support solide, de 0 à 5 % d'un agent mouillant, de 3 à 10 % d'un agent dispersant et, quand cela est nécessaire, de 0 à 10 % d'un ou plusieurs additifs appropriés.

Les suspoémulsions comprennent le plus souvent 10 à 50 % en poids de matières actives ou d'associations, de 0,5 à 15 % d'agents tensio actifs, de 0,1 à 10 % d'agents épaississants et de 0 à 10 % d'additifs appropriés.

Les suspensions concentrées contiennent en général 10 à 75 % de matières actives ou d'associations, de 0,5 à 15 % d'agents tensio actifs, de 0,1 à 10 % d'agents épaississants et de 0 à 10 % d'additifs appropriés.

Parmi ces additifs appropriés, on peut citer des colloïdes thixotropes, des agents de pénétration, des stabilisants, des séquestrants, etc ...

Lesdites compositions peuvent encore contenir d'autres matières actives à propriétés pesticides (notamment insecticides ou fongicides), ou à propriétés favorisant la croissance des plantes (notamment des engrais), ou à propriétés régulatrices de croissance sous réserve qu'il n'y ait pas d'imcompatibilité majeure entre toutes ces matières actives.

Dans le cas des HBN s sous forme ester, il est préférable, sous réserve d'optimisation à la portée de l'homme de métier spécialiste dans l'art de la formulation de produits phytosanitaires, de fabriquer une suspoémulsion à partir d'un concentré émulsionnable de HBN sous forme ester et d'le 2-chloro 6-nitro 3-phénoxy sous forme de suspension concentrée.

On sait que dans ce type de formulation, le 2-chloro 6-nitro 3-phénoxy se trouvera sous forme de fines particules en suspension et l'HBN ester sous la forme solubilisée, le tout se présentant sous la forme d'une émulsion stable.

Dans le cas des HBN s sous forme phénolique, il est préférable de fabriquer une suspension concentrée en émettant évidemment toujours les mêmes réserves quant à la faisabilité industrielle qui nécessitera éventuellement des ajustements. Notamment, il faudra prendre soin d'éviter la formation d'un eutectique entre les deux matières actives.

Dans le cas des HBN s sous forme de sel, il est possible de fabriquer une suspension concentrée dans laquelle le sel d'HBN sera sous forme dissoute et le 2-chloro 6-nitro 3-phénoxy aniline en suspension.

Procédé de traitement selon l'invention :

L'invention concerne également un procédé pour contrôler les mauvaises herbes spécialement en milieu où poussent des cultures ou sont destinées à pousser des cultures, qui consiste à appliquer une dose efficace de composition contenant le produit selon l'invention, telle qu'elle vient d'être décrite précédemment.

Parmi ces cultures, on utilisera de préférence l'association le 2-chloro 6-nitro 3-phénoxy anilinebromoxynil ester (notamment heptanoate et/ou octanoate) sur céréales (blé, orge...) et maïs, l'association le 2-chloro 6-nitro 3-phénoxy aniline-bromoxynil forme phénolique sur maïs, l'association le 2-chloro 6-nitro 3-phénoxy aniline-ioxynil ester (notamment heptanoate et/ou octanoate) ou phénol sur céréales, canne à sucre, riz, oignons.

Lors de l'application, la dose devrait être suffisante pour contrôler la croissance des adventices sans causer de dommages substantiels permanents auxdites cultures. Par dose efficace, on entend justement dans ce contexte la dose qui permet d'obtenir ce résultat.

L'application est effectuée en post levée des cultures. On entend désigner par post levée l'application du produit après émergence du sol de la plante cultivée. Le mélange est actif sur les feuilles des adventices, mais aussi par application sur le sol et absorption racinaire subséquente.

Le produit selon l'invention est surtout actif contre les adventices après que celles-ci aient levé bien qu'une action de pré-levée, c'est-à-dire alors que la plante n'a pas encore émergé du sol, soit également possible.

L'action du produit est foliaire et racinaire dans des proportions qui peuvent varier selon les matières actives considérées et les plantes traitées.

Normalement, le produit (qui peut être appliqué en utilisation simultanée, séparée ou étalée dans le temps) sera appliqué à une dose allant de 150 g/ha à 1.100 g/ha selon la nature du dihalogéno-3,5 hydroxy-4benzonitrile.

Parmi les mauvaises herbes qui peuvent être contrôlées par le ledit produit (ou ladite composition), on peut citer :

* Pour les dicotylédones présentes en particulier dans les champs de céréales :
  Anthemis arvensis, Anthemis cotula, Brassica nigra, Capsella bursa-pastoris, Chrysanthemum segetum, Galium aparine, Lamium amplexicaule, Lamium purpureum, Lapsana communis, Matricaria inodora, Papaver rhoeas, Raphanus raphnistrum, Sinapis arvensis, Stellaria media, Veronica hederifolia, Veronica persica, Viola arvensis, Viola tricolor, Sirapîs alba ;
* Pour les dicotylédones présentes en particulier dans les champs de maïs :
  Abutilon theophrasti, Amaranthus retroflexus, Atriplex patula, Bidens pilosa, Chenopodium album, Datura stramonium, Ipomea purpurea, Polygonum spp. (e.g. Polygonum aviculare, Polygonum convolvulus et Polygonum persicaria), Portulaca oleracea, Solanum migrum, Xanthium strumarium ;
* Pour les graminées présentes en particulier dans les champs de céréales :
  Alopecurus myosuroïdes, Apera spica-venti ;

* Pour les graminées présentes en particulier dans les champs de maïs :

  Digitaria sanguinalis, Echinochloa crus-galli, Setaria viridis.

  Selon les variantes suivantes :

- l'association bromoxynil octanoate ou heptanoate-2-chloro 6-nitro 3-phénoxy aniline sera appliquée sur céréales comme le blé, l'orge notamment, ou le maïs. La dose par hectare sera avantageusement de

  50 à 500 g/ha de 2-chloro 6-nitro 3-phénoxy aniline,

  100 à 400 g/ha de bromoxynil ester, très avantageusement :

  100 à 400 g/ha d'le 2-chloro 6-nitro 3-phénoxy aniline,

  120 à 300 g/ha de bromoxynil ester ;

- l'association bromoxynil phénol-2-chloro 6-nitro 3-phénoxy aniline sera appliquée sur maïs à une dose par hectare de :

  50 à 500 g d'le 2-chloro 6-nitro 3-phénoxy aniline,

  200 à 800 g de bromoxynil phénol, de préférence :

  100 à 400 g d'le 2-chloro 6-nitro 3-phénoxy aniline,

  240 à 600 g de bromoxynil phénol.

L'invention va maintenant être décrite par rapport à des exemples concrets de réalisation qui ne sont bien entendu donnés qu'à tire indicatif ne pouvant en aucune façon limiter la portée de ladite invention.

Afin de simplifier la méthode et parvenir à une meilleure base de comparaison, on a choisi :

- Galium aparine,
- Viola tricolor,
- Sinapis alba,
- Lamium purpureum,
- Veronica persica,

pour montrer l'activité du produit sur les mauvaises herbes du blé et montrer la sélectivité du produit sur cette culture.

Mode expérimental général :

L'application est effectuée en post levée des espèces végétales.

Dans des pots de 9 X 9 X 9 cm remplis de terre agricole légère, on sème un nombre de graines déterminé en fonction de l'espèce végétale et de la grosseur de la graine.

On recouvre ensuite les graines d'une couche de terre d'environ 3 mm d'épaisseur et on laisse germer la graine jusqu'a a ce qu'elle donne naissance a une plantule au stade convenable. Le stade de traitement pour les graminées est le stade de "deuxième feuille en formation". Le stade de traitement pour les dicotylédones est le stade "cotylédons étalés, première feuille vraie en développement".

Les pots sont alors traités par pulvérisation de bouillie en quantité correspondant à une dose volumique d'application de 500 l/ha et contenant les matières actives à pulvériser.

Les bouillies sont obtenues par dilution dans l'eau des produits formulés.

On a utilisé les produits formulés suivants :

- Le 2-chloro 6-nitro 3-phénoxy aniline suspension concentrée à 600 g/l "Challenge 600" [(R)],
- Bromoxynil octanoate concentré émulsionnable à 225 g/l "Buctril" [(R)]. Ces formulations sont dûment homologués et bien connues dans l'art.

Les pots sont alors placés dans des bacs destinés à recevoir l'eau d'arrosage, en subirrigation, et maintenus pendant 24 jours à température ambiante sous 60 % d'humidité relative.

Au bout de 24 jours, on compte le nombre de plantes vivantes dans les pots traités par la bouillie contenant la matière active à tester et le nombre de plantes vivantes dans un pot témoin traité selon les mêmes conditions, mais au moyen d'une bouillie ne contenant pas de matirère active. On détermine ainsi le pourcentage de destruction des plantes traitées par rapport au témoin non traité. Un pourcentage de destruction égal à 100 % indique qu'il y a eu destruction complète de l'espèce végétale considérée et un pourcentage de 0 % indique que le nombre de plantes vivantes dans le pot traité est identique à celui dans le pot témoin. Dans les exemples suivants, les unités des matières actives sont des g/ha.

6

Exemple 1 :

Essai montrant la nature de l'effet synergique biologique de l'association du bromoxynil octanoate et de 2-chloro 6-nitro 3-phénoxy aniline sur Sinapis alba :

L'expérimentation est conduite en ayant semé des graines de Sinapis alba.

Le tableau ci-dessous représente la moyenne de 1 essai en serre. Pour chaque dose, la valeur supérieure est la valeur obtenue et la valeur inférieure est celle attendue calculée selon Colby.

### Bromoxynil octanoate

| | | 0 | 62 | 125 | 250 |
|---|---|---|---|---|---|
| | 0 | 0 | 40 | 83 | 99 |
| Le 2-chlo-ro 6-nitro 3-phénoxy aniline | 62 | 0 | 55 / 40 | 80 / 83 | 100 / 99 |
| | 125 | 5 | 90 / 43 | 100 / 84 | 100 / 99 |
| | 250 | 10 | 65 / 46 | 100 / 85 | 100 / 99 |

Les résultats indiqués dans le tableau ci-dessous montrent clairement, en se référant à la formule indiquée en début de description, le degré excellent et inattendu de synergie obtenu avec l'association de l'invention.

Exemple 2 :

Essai montrant la nature de l'effet synergique biologique de l'association du bromoxynil octanoate et de 2-chloro 6-nitro 3-phénoxy aniline sur Galium aparine :

L'expérimentation est conduite en ayant semé des graines de Galium aparine.

Le tableau ci-dessous représente la moyenne de 1 essai en serre. Pour chaque dose, la valeur supérieure est la valeur obtenue et la valeur inférieure est celle attendue calculée selon Colby.

EP 0 457 695 B1

## Bromoxynil octanoate

| | | 0 | 62 | 125 | 250 |
|---|---|---|---|---|---|
| | 0 | 0 | 0 | 0 | 5 |
| Le 2-chloro 6-nitro 3-phénoxy aniline | 62 | 0 | 10 / 0 | 15 / 0 | 25 / 5 |
| | 125 | 0 | 60 / 0 | 55 / 0 | 65 / 5 |
| | 250 | 10 | 60 / 10 | 50 / 10 | 55 / 14 |

Les résultats indiqués dans le tableau ci-dessous montrent clairement, en se référant à la formule indiquée en début de description, le degré excellent et inattendu de synergie obtenu avec l'association de l'invention.

Exemple 3 :

Essai montrant la nature de l'effet synergique biologique de l'association dit bromoxynil octanoate et de le 2-chloro 6-nitro 3-phénoxy aniline sur Viola tricolor :

L'expérimentation est conduite en ayant semé des graines de Viola tricolor.

Le tableau ci-dessous représente la moyenne de 1 essai en serre. Pour chaque dose, la valeur supérieure est la valeur obtenue et la valeur inférieure est celle attendue calculée selon Colby.

EP 0 457 695 B1

Bromoxynil octanoate

|  |  | 0 | 62 | 125 | 250 |
|---|---|---|---|---|---|
|  | 0 | 0 | 10 | 15 | 15 |
| Le 2-chloro 6-nitro 3-phénoxy aniline | 62 | 0 | 10<br>10 | 30<br>15 | 45<br>15 |
|  | 125 | 0 | 20<br>10 | 30<br>15 | 20<br>15 |
|  | 250 | 5 | 40<br>14 | 60<br>19 | 55<br>19 |

Les résultats indiqués dans le tableau ci-dessous montrent clairement, en se référant à la formule indiquée en début de description, le degré excellent et inattendu de synergie obtenu avec l'association de l'invention.

Exemple 4 :

Essai montrant la nature de l'effet synergique biologique de l'association du bromoxynil octanoate et de le 2-chloro 6-nitro 3-phénoxy aniline sur Lamium purpureum :

L'expérimentation est conduite en ayant semé des graines de lamium purpurea.

Le tableau ci-dessous représente la moyenne de 1 essai en serre. Pour chaque dose, la valeur supérieure est la valeur obtenue et la valeur inférieure est celle attendue calculée selon Colby.

Bromoxynil octanoate

|  |  | 0 | 62 | 125 | 250 |
|---|---|---|---|---|---|
|  | 0 | 0 | 0 | 5 | 35 |
| Le 2-chlo- ro 6-nitro 3-phénoxy aniline | 62 | 0 | 70 / 0 | 70 / 5 | 80 / 35 |
|  | 125 | 20 | 75 / 55 | 95 / 24 | 100 / 48 |
|  | 250 | 50 | 100 / 50 | 100 / 52 | 100 / 66 |

Les résultats indiqués dans le tableau ci-dessous montrent clairement, en se référant à la formule indiquée en début de description, le degré excellent et inattendu de synergie obtenu avec l'association de l'invention.

Exemple 5 :

Essai montrant la nature de l'effet synergique biologique de l'association du bromoxynil octanoate et de le 2-chloro 6-nitro 3-phénoxy aniline sur Veronica persica.

L'expérimentation est conduite en ayant semé des graines de Veronica persica.

Le tableau ci-dessous représente la moyenne de 1 essai en serre. Pour chaque dose, la valeur supérieure est la valeur obtenue et la valeur inférieure est celle attendue calculée selon Colby.

### Bromoxynil octanoate

| | | 0 | 62 | 125 | 250 |
|---|---|---|---|---|---|
| | 0 | 0 | 0 | 0 | 5 |
| Le 2-chloro 6-nitro 3-phénoxy aniline | 62 | 0 | 0<br>0 | 25<br>0 | 50<br>5 |
| | 125 | 0 | 30<br>0 | 45<br>0 | 65<br>5 |
| | 250 | 50 | 40<br>0 | 65<br>0 | 75<br>5 |

Les résultats indiqués dans le tableau ci-dessous montrent clairement, en se référant à la formule indiquée en début de description, le degré excellent et inattendu de synergie obtenu avec l'association de l'invention.

Exemple 6 :

Essai montrant l'absence de phytotoxicité de l'association du bromoxynil octanoate et de le 2-chloro 6-nitro 3-phénoxy aniline sur Triticum aestivum.

L'expérimentation mise en ouvre comme précédemment, mais après avoir semé des graines de blé, conduit aux résultats indiqués dans le tableau ci-dessous.

### Bromoxynil octanoate

| | | 0 | 62 | 125 | 250 |
|---|---|---|---|---|---|
| | 0 | 0 | 0 | 0 | 0 |
| Le 2-chloro ro 6-nitro 3-phénoxy aniline | 62 | 0 | 0 | 0 | 0 |
| | 125 | 0 | 0 | 0 | 0 |
| | 250 | 0 | 0 | 0 | 0 |

On constate donc que l'association précitée, bien qu'augmentant l'activité respective des deux matières actives sur les adventices exemplifiées, ne révèle aucune phytotoxicité sur le blé.

**Revendications**

1. Produit herbicide résultant de l'association de :
   a) 2-chloro 6-nitro 3-phénoxy aniline et,
   b) un ou plusieurs herbicides de type 3,5-dihalogeno 4-hydroxy benzonitrile choisi parmi le bromoxynil qui est le 3,5-dibromo-4-hydroxybenzonitrile ou un ester ou sel acceptable en agriculture de celui-ci ou l'ioxynil qui est le 4-hydroxy-3,5 diiodo benzonitrile ou un ester ou sel acceptable en agriculture de celui-ci, en une quantité produisant une activité herbicide synergique.

2. Produit selon la revendication 1, caractérisé en ce que l'herbicide b) est l'ester du bromoxynil ou ioxynil avec un acide alcanoïque comprenant de 4 à 8 atomes de carbone.

3. Produit selon la revendication 2, caractérisé en ce que l'herbicide b) est le bromoxynil octanoate ou heptanoate ou un mélange des deux.

4. Produit selon la revendication 1, pour une utilisation simultanée, séparée ou étalée dans le temps pour le traitement des végétaux indésirables ou adventices dans les cultures.

5. Produit selon la revendication 1, caractérisé en ce que le rapport en poids du 2-chloro 6-nitro 3-phénoxy aniline à l'HBN est compris entre 0,1 et 10.

6. Produit selon la revendication 2 ou 3, caractérisé en ce que le rapport en poids de le 2-chloro 6-nitro 3-phénoxy anilineou bromoxynil ou ioxynil ester est compris entre 0,2 et 5.

7. Produit selon l'une des revendications 1 à 6, caractérisé en ce qu'il comprend une dose non ou peu herbicide de 2-chloro 6-nitro 3-phénoxy aniline.

8. Utilisation du 2-chloro 6-nitro 3-phénoxy aniline à titre d'amplificateur de l'activité de l'HBN dans un produit selon la revendication 7.

9. Composition herbicide contenant un produit selon l'une des revendications 1 à 7, au moins un support inerte et/ou au moins un agent tensio actif.

10. Composition herbicide, selon la revendication 9, caractérisée en ce qu'elle contient entre 0,5 et 95 % de produit selon l'une des revendications 1 à 7.

11. Procédé de contrôle des mauvaises herbes en post-levée des cultures, caractérisé en ce que l'on applique à l'endroit où pousse ladite culture, une dose efficace d'un produit selon l'une des revendications 1 à 7.

12. Procédé de contrôle selon la revendication 11, caractérisé en ce que les adventices contrôlées sont :
    * Pour les dicotylédones présentes en particulier dans les champs de céréales :
      Anthemis arvensis, Anthemis cotula, Brassica nigra, Capsella bursa-pastoris, Chrysanthemum segetum, Galium aparine, Lamium amplexiccurle, Lamium purpureum, Lapsana communis, Matricaria inodora, Papavor rhoeas, Raphanus raphnistrum, Sinapis arvensis, Stellania media, Veronica hederifolia, Veronica persica, Viola arvensis, Viola tricolor, Sinapis alba
    * Pour les dicotylédones présentes en particulier dans les champs de maïs :
      Abuticlon theophrasti, Amaranthus retroflexus, Atriplex patula, Bidens pilosa, Chenopodium album, Datura stramonium, Ipomea purpurea, Polygonum spp. (e.g. Polygonum aviculare, Polygonum convolvulus et Polygonum persicaria), Portulaca oleracea, Solanum migrum, Xanthium strumarium ;
    * Pour les graminées présentes en particulier dans les champs de céréales :
      Alopecurus myosuroïdes, Apera spica-venti ;
    * Pour les graminées présentes en particulier dans les champs de maïs :
      Digitaria sanguinalis, Echinochloa crus-galli, Setaria viridis.

13. Procédé de contrôle selon la revendication 11, caractérisé en ce que les cultures sont les céréales (blé, orge ...) et maïs pour l'association 2-chloro 6-nitro 3-phénoxy aniline-bromoxynil ester, le maïs pour l'association 2-chloro 6-nitro 3-phénoxy anilinebromoxynil phénol, les céréales, la canne à sucre, le riz, les oignons pour l'association 2-chloro 6-nitro 3-phénoxy aniline-ioxynil ester ou phénol.

**14.** Procédé de contrôle selon la revendication 11, caractérisé en ce que l'on applique le produit selon la revendication 2 sur céréales (comme le blé, l'orge) ou maïs à raison de :
50 à 500 g/ha de 2-chloro 6-nitro 3-phénoxy aniline,
100 à 400 g/ha de bromoxynil ester.

**15.** Procédé selon la revendication 14, caractérisé en ce que l'on applique le produit à raison de :
100 à 400 g/ha de 2-chloro 6-nitro 3-phénoxy aniline,
120 à 300 g/ha de bromoxynil ester.

**16.** Procédé de contrôle selon la revendication 11, caractérisé en ce que l'on applique l'association bromoxynil phénol-2-chloro 6-nitro 3-phénoxy aniline, selon la revendication 1, est appliquée sur maïs à une dose par hectare de :
50 à 500 g de 2-chloro 6-nitro 3-phénoxy aniline,
200 à 800 g de bromoxynil phénol.

**17.** Procédé selon la revendication 16, caractérisé en ce que l'on applique le produit à raison de :
100 à 400 g/ha de 2-chloro 6-nitro 3-phénoxy aniline,
240 à 600 g/ha de bromoxynil phénol.

**Claims**

**1.** Herbicidal product resulting from a combination of:
a) 2-chloro-6-nitro-3-phenoxyaniline, and
b) one or more herbicides of the 3,5-dihalo-4-hydroxybenzonitrile type, selected from amongst bromoxynil, which is 3,5-dibromo-4-hydroxybenzonitrile or an agriculturally acceptable ester or salt thereof, or ioxynil, which is 4-hydroxy-3,5-diiodobenzonitrile, or an agriculturally acceptable ester or salt thereof, in an amount producing a synergistic herbicidal activity.

**2.** Product according to claim 1, characterized in that herbicide b) is the ester of bromoxynil or ioxynil with an alkanoic acid having 4 to 8 carbon atoms.

**3.** Product according to claim 2, characterized in that herbicide b) is bromoxynil octanoate or heptanoate, or a mixture of the two.

**4.** Product according to claim 1, for simultaneous or separate use, or use staggered over a period of time, for the treatment of undesirable plants or weeds in crops.

**5.** Product according to claim 1, characterized in that the ratio by weight of 2-chloro-6-nitro-3-phenoxyaniline to HBN is between 0.1 and 10.

**6.** Product according to claim 2 or 3, characterized in that the ratio by weight of 2-chloro-6-nitro-3-phenoxyaniline to bromoxynil or ioxynil ester is between 0.2 and 5.

**7.** Product according to one of claims 1 to 6, characterized in that it comprises a non-herbicidal or weakly herbicidal dosage of 2-chloro-6-nitro-3-phenoxyaniline.

**8.** Use of 2-chloro-6-nitro-3-phenoxyaniline by way of amplifier of the HBN activity in a product according to claim 7.

**9.** Herbicidal composition which contains a product according to one of claims 1 to 7, at least one inert carrier, and at least one surfactant.

**10.** Herbicidal composition according to claim 9, characterized in that it contains between 0.5 and 95% of product according to one of claims 1 to 7.

**11.** Method of controlling weeds after emergence of the crops, characterized in that an effective dosage of a product according to one of claims 1 to 7 is applied to the site where said crop is growing.

**12.** Control method according to claim 11, characterized in that the weeds controlled are:
* From amongst the dicotyledons which are present mainly in cereal fields:
Anthemis arvensis, Anthemis cotula, Brassica nigra, Capsella bursa-pastoris, Chrysanthemum segetum, Galium aparine, Lamium amplexicaule, Lamium purpureum, Lapsana communis, Matricaria inodora, Papaver rhoeas, Raphanus raphanistrum, Sinapis arvensis, Stellaria media, Veronica hederifolia, Veronica persica Viola arvensis, Viola tricolor, Sinansis alba
* From amongst the dicotyledons which are present mainly in maize fields:
Abutilon theophrasti, Amaranthus retroflexus, Atriplex patula, Bidens pilosa, Chenopodium album, Datura stramonium, Ipomea purpurea, Polygonum spp. (e.g. Polygonum aviculare, Polygonum convolvulus and Polygonum persicaria), Portulaca oleracea, Solanum nigrum Xanthium strumarium;
* From amongst the grasses present mainly in cereal fields:
Alopecurus myosuroides, Apera spica-venti;
* From amongst the grasses present mainly in maize fields:
Digitaria sanguinalis, Echinochloa crus-galli, Setaria viridis.

**13.** Control method according to claim 11, characterized in that the crops are the cereals (wheat, barley, etc.) and maize in the case of the combination of 2-chloro-6-nitro-3-phenoxyaniline/bromoxynil ester, maize in the case of the combination 2-chloro-6-nitro-3-phenoxyaniline/bromoxynil-phenol, and the cereals, sugar cane, rice and onions in the case of the combination 2-chloro-6-nitro-3-phenoxyaniline/ioxynil ester or phenol.

**14.** Control method according to claim 11, characterized in that it comprises application of the product according to claim 2 to cereals (such as wheat or barley) or maize at a rate of:
50 to 500 g/ha of 2-chloro-6-nitro-3-phenoxyaniline, and
100 to 400 g/ha of bromoxynil ester.

**15.** Method according to claim 14, characterized in that the product is applied at a rate of:
100 to 400 g/ha of 2-chloro-6-nitro-3-phenoxyaniline, and
120 to 300 g/ha of bromoxynil ester.

**16.** Control method according to claim 11, characterized in that it comprises application of the combination bromoxynil-phenol/2-chloro-6-nitro-3-phenoxyaniline, according to claim 1, to maize in a dosage per hectare of:
50 to 500 g of 2-chloro-6-nitro-3-phenoxyaniline, and
200 to 800 g of bromoxynil phenol.

**17.** Method according to claim 16, characterized in that the product is applied at a rate of:
100 to 400 g/ha of 2-chloro-6-nitro-3-phenoxyaniline, and
240 to 600 g/ha of bromoxynil phenol.

## Patentansprüche

**1.** Herbizides Produkt, das sich aus der Kombination von
a) 2-Chlor-6-nitro-3-phenoxyanilin mit
b) einem oder mehreren Herbiziden vom Typ der 3,5-Dihalogen-4-hydroxybenzonitrile, die ausgewählt sind unter Bromoxynil, bei dem es sich um 3,5-Dibrom-4-hydroxybenzonitril handelt, und seinen in der Landwirtschaft akzeptablen Estern und Salzen sowie Ioxynil, bei dem es sich um 4-Hydroxy-3,5-diiodbenzonitril handelt, und seinen in der Landwirtschaft akzeptablen Estern und Salzen,
ergibt, in einer Menge, bei der eine synergistische herbizide Wirksamkeit hervorgerufen wird.

**2.** Produkt nach Anspruch 1,
dadurch gekennzeichnet, daß
das Herbizid b) ein Ester von Bromoxynil oder Ioxynil mit einer Alkansäure ist, die 4 bis 8 Kohlenstoffatome enthält.

3. Produkt nach Anspruch 2,
   dadurch gekennzeichnet, daß
   das Herbizid b) Bromoxyniloctanoat oder Bromoxynilheptanoat oder ein Gemisch dieser beiden Ester ist.

4. Produkt nach Anspruch 1 zur gleichzeitigen, getrennten oder zeitlich gestaffelten Verwendung zur Behandlung unerwünschter Pflanzen oder wildwachsender Unkräuter in Kulturen.

5. Produkt nach Anspruch 1,
   dadurch gekennzeichnet, daß
   das Gewichtsverhältnis von 2-Chlor-6-nitro-3-phenoxyanilin zu HBN (Hydroxybenzonitril) 0,1 bis 10 beträgt.

6. Produkt nach Anspruch 2 oder 3,
   dadurch gekennzeichnet, daß
   das Gewichtsverhältnis von 2-Chlor-6-nitro-3-phenoxyanilin zu Bromoxynilestern oder Ioxynilestern 0,2 bis 5 beträgt.

7. Produkt nach einem der Ansprüche 1 bis 6,
   dadurch gekennzeichnet, daß
   es eine nicht oder wenig herbizid wirkende Menge an 2-Chlor-6-nitro-3-phenoxyanilin enthält.

8. Verwendung von 2-Chlor-6-nitro-3-phenoxyanilin als Verstärker der Wirkung von HBN in Produkten nach Anspruch 7.

9. Herbizide Zusammensetzung, die ein Produkt nach einem der Ansprüche 1 bis 7, mindestens einen inerten Träger und/oder mindestens ein oberflächenaktives Mittel enthält.

10. Herbizide Zusammensetzung nach Anspruch 9,
    dadurch gekennzeichnet, daß
    sie 0,5 bis 95 % Produkt nach einem der Ansprüche 1 bis 7 enthält.

11. Verfahren zur Kontrolle von Unkräutern in Kulturen im Nachauflaufverfahren,
    dadurch gekennzeichnet, daß
    am Ort der auflaufendein Kultur eine wirksame Menge eines der Produkte nach einem der Ansprüche 1 bis 7 angewendet wird.

12. Verfahren zur Kontrolle nach Anspruch 11,
    dadurch gekennzeichnet, daß
    folgende wildwachsende Unkräuter kontrolliert werden:
    - zweikeimblättrige Pflanzen, die insbesondere in Getreidefeldern vorkommen:
      Anthemis arvensis, Anthemis cotula, Brassica nigra, Capsella bursa-pastoris, Chrysanthemum segetum, Galium aparine, Lamium amplexiccurle, Lamium purpureum, Lapsana communis, Matricaria inodora, Papaver rhoeas, Raphanus raphnistrum, Sinapis arvensis, Stellaria media, Veronica hederifolia, Veronica persica, Viola arvensis, Viola tricolor, Sinapis alba,
    - zweikeimblättrige Pflanzen, die insbesondere in Maisfeldern vorkommen:
      Abuticlon theophrasti, Amaranthus retroflexus, Atriplex patula, Bidens pilosa, Chenopodium album, Datura stramonium, Ipomea purpurea, Polygonum spp. (z.B. Polygonum aviculare, Polygonum convolvulus und Polygonum persicaria), Portulaca oleracea, Solanum nigrum, Xanthium strumarium,
    - Gräser, die insbesondere in Getreidefeldern vorkommen:
      Alopecurus myosuroïdes, Apera spica-venti,
    - Gräser, die insbesondere in Maisfeldern vorkommen:
      Digitaria sanguinalis, Echinochloa crus-galli, Setaria viridis.

**13.** Verfahren zur Kontrolle nach Anspruch 11,
dadurch gekennzeichnet, daß
bei Getreidekulturen (Weizen, Gerste ...) und Maiskulturen die Kombination 2-Chlor-6-nitro-3-phenoxyanilin/Bromoxynilester, bei Maiskulturen die Kombination 2-Chlor-6-nitro-3-phenoxyanilin/Bromoxynil, bei Getreide-, Rohrzucker-, Reis- und Zwiebelkulturen die Kombination 2-Chlor-6-nitro-3-phenoxyanilin/Ioxynil oder die Kombination 2-Chlor-6-nitro-3-phenoxyanilin/Ioxynilester verwendet werden.

**14.** Verfahren zur Kontrolle nach Anspruch 11,
dadurch gekennzeichnet, daß
das Produkt nach Anspruch 2 in Getreidekulturen (wie z.B. Weizen, Gerate) oder in Maiskulturen in folgender Menge ausgebracht wird:
- 2-Chlor-6-nitro-3-phenoxyanilin: 50 bis 500 g/ha,
- Bromoxynilester: 100 bis 400 g/ha.

**15.** Verfahren nach Anspruch 14,
dadurch gekennzeichnet, daß
das Produkt in folgender Menge ausgebracht wird:
- 2-Chlor-6-nitro-3-phenoxyanilin: 100 bis 400 g/ha,
- Bromoxynilester: 120 bis 300 g/ha.

**16.** Verfahren zur Kontrolle nach Anspruch 11,
dadurch gekennzeichnet, daß
die Kombination 2-Chlor-6-nitro-3-phenoxyanilin/Bromoxynil nach Anspruch 1 in Maiskulturen in folgender Menge pro Hektar ausgebracht wird:
- 2-Chlor-6-nitro-3-phenoxyanilin: 50 bis 500 g/ha,
- Bromoxynil: 200 bis 800 g/ha

**17.** Verfahren nach Anspruch 16,
dadurch gekennzeichnet, daß
das Produkt im folgenden verhältnis ausgebracht wird:
- 2-Chlor-6-nitro-3-phenoxyanilin: 100 bis 400 g/ha,
- Bromoxynil: 240 bis 600 g/ha.